(19) Europäisches Patentamt
European Patent Office
Office européen des brevets

(11) **EP 1 919 728 B1**

(12) **EUROPÄISCHE PATENTSCHRIFT**

(45) Veröffentlichungstag und Bekanntmachung des Hinweises auf die Patenterteilung:
**09.04.2014 Patentblatt 2014/15**

(51) Int Cl.:
*B60W 10/06* (2006.01)   *B60W 10/184* (2012.01)
*B60W 30/14* (2006.01)   *B60K 31/04* (2006.01)
*B60T 7/12* (2006.01)   *B60T 8/24* (2006.01)

(21) Anmeldenummer: **06776996.8**

(22) Anmeldetag: **21.08.2006**

(86) Internationale Anmeldenummer:
**PCT/EP2006/008210**

(87) Internationale Veröffentlichungsnummer:
**WO 2007/025659 (08.03.2007 Gazette 2007/10)**

(54) **SYSTEM ZUR KONTROLLE DER BERGABFAHRT EINES KRAFTFAHRZEUGES**

SYSTEM FOR CONTROLLING A MOTOR VEHICLE DRIVING DOWNHILL

SYSTEME DE CONTROLE D'ADHERENCE EN DESCENTE POUR UN VEHICULE A MOTEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.08.2005 DE 102005041071**

(43) Veröffentlichungstag der Anmeldung:
**14.05.2008 Patentblatt 2008/20**

(73) Patentinhaber: **Lucas Automotive GmbH
56070 Koblenz (DE)**

(72) Erfinder:
• **BACH, Thomas
56332 Wolken (DE)**
• **BLESER, Michael
56637 Plaidt (DE)**
• **HOFFMANN, Elmar
56584 Meinborn (DE)**
• **WÖLL, Stefan
56357 Weyer (DE)**
• **THELEN, Harald
56332 Oberfell (DE)**

(74) Vertreter: **Schmidt, Steffen
Wuesthoff & Wuesthoff
Patent- und Rechtsanwälte
Schweigerstrasse 2
81541 München (DE)**

(56) Entgegenhaltungen:
WO-A-96/40534   WO-A1-01/14185
DE-A1- 10 101 012   DE-A1- 19 648 559
DE-A1- 19 925 368   DE-C1- 10 006 780
US-A1- 2004 215 385

**Beschreibung**

Hintergrund der Erfindung

Die Erfindung betrifft ein System für eine so bezeichnete "Bergabfahrtssteuerung" ("Hill Descent Control" (HDC)) für ein Kraftfahrzeug, also ein System zur Kontrolle der Geschwindigkeit bei der Bergabfahrt eines Kraftfahrzeuges. Dabei betrifft die Erfindung bei einer derartigen Bergabfahrtssteuerung die Aspekte "Stellen der Bergabfahrtssteuerung" und "Aufschalten des Hangabtriebes als Störgröße".

Ein Bergabfahrtssteuerungs-System ist unter anderem aus der EP 0 856 446 B1 bekannt. Es dient dazu die Traktion und Fahrstabilität des Kraftfahrzeugs beim Befahren steil geneigter Fahrwege, insbesondere im Gelände zu gewährleisten. Dieses System ist gedacht für ein Radfahrzeug mit mehreren Rädern, mehreren, jeweils zum Bremsen eines der Räder bestimmten Bremsen, einem Gaspedal, einem Bremspedal und einem Radblockiersensor um ein Blockieren eines der Räder zu erfassen. Eine Steuerung hat einen aktivierten und einen deaktivierten Zustand. In ihrem aktivierten Zustand ist jede Bremse zur Abbremsung des Kraftfahrzeugs betätigt, wenn eine erfaßte Kraftfahrzeuggeschwindigkeit über einer vorbestimmten Sollgeschwindigkeit liegt und keine Radblockierung erfaßt wird. Eine der Bremsen wird freigegeben, wenn ein Blockieren des zugeordneten Rades erfaßt wird, während sich die erfasste Kraftfahrzeuggeschwindigkeit über der Sollgeschwindigkeit befindet. Bei Eintritt in den aktivierten Zustand steuert die Steuerung die Bremse so, dass die Beschleunigungsrate des Kraftfahrzeugs die Sollgeschwindigkeit ohne Betätigung der Pedale erreicht, wenn die Kraftfahrzeuggeschwindigkeit wesentlich geringer als die Sollgeschwindigkeit ist.

Bei Eintritt in den aktivierten Zustand vergleicht die Steuerung die Kraftfahrzeuggeschwindigkeit mit der Sollgeschwindigkeit und steuert die Bremsmittel so, daß sich die Kraftfahrzeuggeschwindigkeit der Sollgeschwindigkeit annähert. Die Verzögerungsrate des Kraftfahrzeugs wird zur Sollgeschwindigkeit hingesteuert, wenn die Kraftfahrzeuggeschwindigkeit wesentlich höher als die Sollgeschwindigkeit ist. Die Beschleunigungsrate kann auf einen vorbestimmten Maximalwert von ca. 0,2 bis 0,3 g begrenzt sein. Der aktivierte Zustand kann nur gewählt werden, wenn sich das Kraftfahrzeug im ersten Gang oder im Rückwärtsgang befindet. Im aktivierten Zustand wird durch die Betätigung eines Bremsanforderungsmittels des Kraftfahrzeugs durch einen Fahrer die Steuerung außer Kraft gesetzt, um die Stärke des Bremsens über die von der Steuerung bereitgestellte zu vergrößern. So wird das Kraftfahrzeug unter die Sollgeschwindigkeit verlangsamt, wenn keine Radblockierung erfaßt wird. Die Steuerung kann in ihrem aktivierten Zustand die Bremsen zumindest teilweise freigeben, wenn die erfaßte Kraftfahrzeuggeschwindigkeit unter der Sollgeschwindigkeit liegt. Die Steuerung kann durch einen manuell betätigbaren Schalter aktiviert werden. Die Steuerung betätigt, wenn erforderlich, die Bremsen, sofern die erfasste Kraftfahrzeuggeschwindigkeit unter der Sollgeschwindigkeit liegt, um zu gewährleisten, daß die Beschleunigungsrate des Kraftfahrzeugs geringer als ein Grenzwert ist.

Der Erfindung zugrundeliegenes Problem

Hier tritt besonders das Problem auf, dass unbefestigte und schlüpfrige Bodenverhältnisse das Befahren mit einem Kraftfahrzeug erheblich erschweren. Da das Befahren steil geneigter Fahrwege in der Regel mit einer niedrigen Geschwindigkeit erfolgt, ist eine Reduzierung bzw. Zurücknahme des vom Kraftfahrzeugmotor aufgebrachten Antriebsmomentes, auch wenn eine unterste Gangstufe eingelegt ist, alleine noch nicht ausreichend. Vielmehr sind zusätzlich Bremsmomente an den Rädern bereitzustellen.

Moderne Kraftfahrzeuge sind üblicherweise mit einer elektrisch steuerbaren Betriebsbremsanlage ausgerüstet, um neben der Antiblockierregelfunktion (ABS) auch von einer Fahrerbetätigung unabhängige, also automatische Bremsfunktionen, wie z.B. Antriebsschlupfregelung (ASR) oder Fahrdynamikregelung (ESP) ausführen zu können. Dazu umfasst die Betriebsbremsanlage eine entsprechend ausgestaltete elektrohydraulische Steuereinheit, einen elektronisch steuerbaren Bremskraftverstärker oder ist als so bezeichnete "Brake-By-Wire" (BBW) Anlage ausgebildet. Zur elektronischen Steuerung bzw. Regelung ist dazu eine elektronische Steuereinheit vorgesehen, die über elektronische Sensoren mit Betriebszuständen des Kraftfahrzeuges in Beziehung stehende Größen erfasst. So wird z.B. für die ABS-Regelung mittels Raddrehzahlsensoren der Schlupf der Kraftfahrzeugräder erfasst, um auf in Abhängigkeit vom Schlupf das Drehverhalten der Kraftfahrzeugräder in der Weise zu steuern bzw. zu regeln, dass ein Blockieren verhindert wird.

WO 0114185A1 beschreibt eine Betriebsbremsanlage mit Bergabfahrtssteuerung. Eine Vorrichtung zur Unterstützung der Bergabfahrtsteuerung erfasst Betriebszustände des Fahrzeuges und stellt beim Befahren steil geneigter Fahrwege unabhängig von einer Betätigung eines Bremspedals zusätzliche Bremsmomente ein. Das Fahrzeugverhalten, das sich aufgrund des Einstellens der Stellgröße ergibt, wird anhand der Fahrzeuggeschwindigkeit fortlaufend erfasst und mit einer gewünschten Geschwindigkeit verglichen.

WO 9611826 beschreibt eine Betriebsbremsanlage mit Bergabfahrtssteuerung, welche beim Befahren steil geneigter Fahrwege unabhängig von einer Betätigung eines Bremspedals zusätzliche Bremsmomente einstellt, sobald die Fahrzeuggeschwindigkeit einen Schwellwert überschreitet.

DE 196 48 559 A1 offenbart ein Verfahren zur Geschwindigkeitsregelung für ein Fahrzeug, wobei die Fahrzeuggeschwindigkeit mittels einer elektrisch steuerbaren Betriebsbremsanlage, einem Bremsstellglied und einer elektronischen Steuereinheit einstellbar ist. Dabei wird die Fahrzeuggeschwindigkeit erfasst und mit einer Fahrzeugsollgeschwindigkeit verglichen. Es wird daraus eine kontinuierlich veränderbare Fahrzeugsollgeschwindigkeit gebildet, auf welche die Fahrzeuggeschwindigkeit eingeregelt wird. Dabei erfolgt eine Anpassung der Fahrzeugsollgeschwindigkeit in Abhängigkeit einer Zielgeschwindigkeit und einer tatsächlichen Fahrzeuggeschwindigkeit. Die Fahrzeugsollgeschwindigkeit wird in einem ersten Bereich gleichmäßig in Abhängigkeit der tatsächlichen Fahrzeuggeschwindigkeit an die Zielgeschwindigkeit angenähert. In einem zweiten Bereich wird die Zielgeschwindigkeit als Fahrzeugsollgeschwindigkeit übernommen, wenn die tatsächliche Fahrzeuggeschwindigkeit abzüglich eines bestimmten Betrags die Zielgeschwindigkeit erreicht oder unter diese fällt. In einem dritten Bereich wird entweder die Zielgeschwindigkeit unmittelbar als Fahrzeugsollgeschwindigkeit übernommen oder die Fahrzeugsollgeschwindigkeit gleichmäßig in Abhängigkeit der tatsächlichen Fahrzeuggeschwindigkeit an die Zielgeschwindigkeit angenähert.

US 2004/0215385 A1 offenbart eine Kriechantriebssteuervorrichtung zum Antreiben eines Fahrzeugs mit einer Kriechgeschwindigkeit. Dabei wird eine Sollgeschwindigkeit gemäß den Antriebszuständen, den Fahrbahnoberflächenzuständen und den Betätigungszuständen bestimmt. Es wird eine Geschwindigkeitsabweichung der Sollgeschwindigkeit von der tatsächlichen Geschwindigkeit berechnet. Bei einer großen Abweichung wird die Sollgeschwindigkeit auf einen Wert geändert, der sich aus der tatsächlichen Geschwindigkeit und einem vorbestimmten Wert zusammensetzt. Dementsprechend wird die Fahrzeuggeschwindigkeit unter Verwendung dieses Wertes allmählich geändert, um die geänderte Sollgeschwindigkeit anschließend zu erneuern.

Erfindungsgemäße Lösung

Durch die Erfindung wird die "Bergabfahrtssteuerung" (HDC) als automatische Bremsfunktion in einer elektrisch steuerbaren Betriebsbremsanlage bereitgestellt, um unabhängig von einer Betätigung des Bremspedals durch den Fahrer zusätzliche Bremsmomente beim Befahren steil geneigter Fahrwege einzustellen.

Dadurch ist der Fahrer vom Betätigen der Bremsanlage entlastet, so dass er sich in einer derartigen, oft kritischen Situation auf das Lenken des Kraftfahrzeuges konzentrieren kann. Dabei können in vorteilhafter Weise ohnehin vorhandene Baugruppen (Regelungsrechner, Sensoren, Stellglieder, Ansteuerungselektronik, etc.) mit verwendet werden. Dies hält nicht nur Aufwand und Kosten gering. Vielmehr sind auch vorhandene Funktionen (zum Beispiel ABS oder ASR) während des Betriebs der "Bergabfahrtssteuerung" verfügbar.

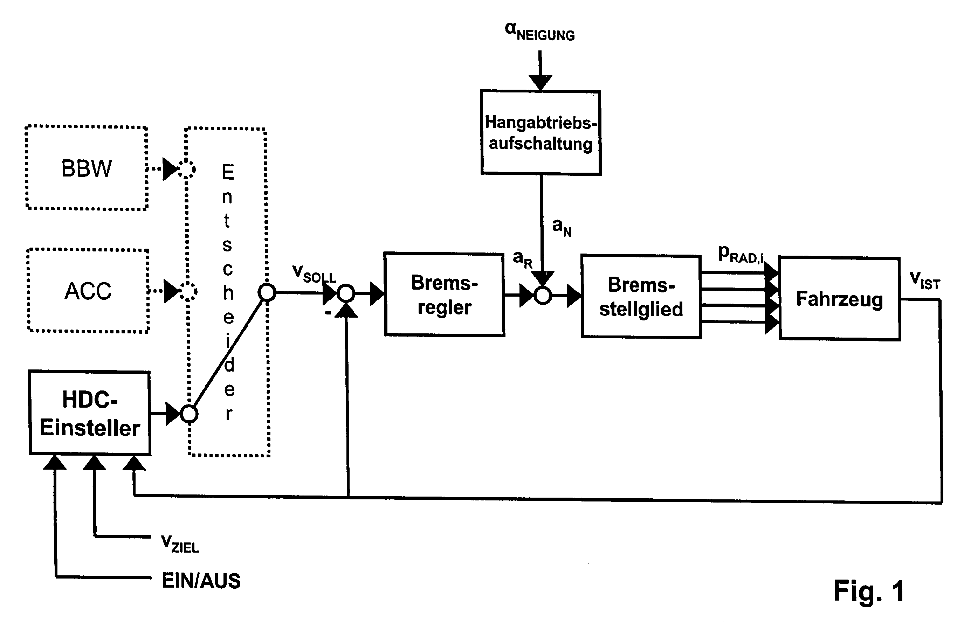

Zur Erläuterung ist in Fig. 1 eine erfindungsgemäße elektrisch steuerbare Betriebsbremsanlage in einem schematischen regelungstechnischen Blockschaltbild dargestellt.

Eine hier als Bremsstellglied bezeichnete Komponente entspricht zum Beispiel einer elektrohydraulischen Steuereinheit, die ein individuelles Einstellen der für die einzelnen Räder i eines Kraftfahrzeuges erzeugten Bremsdrücke $p\_RAD,i$ bzw. Bremsmomente ermöglicht. Dabei ist der jeweilige Bremsdruck $p\_RAD,i$ bzw. das jeweilige Bremsmoment die von der Bergabfahrtssteuerung (HDC) beeinflußte Stellgröße. Die Beeinflussung des Kraftfahrzeugverhaltens, das sich aufgrund des Einstellens der Bremsmomente ergibt, wird hier anhand der aktuellen bzw. tatsächlichen Kraftfahrzeuggeschwindigkeit $v\_IST$, welche die Regelgröße ist, fortlaufend erfasst. Die Regelgröße $v\_IST$ wird mit einer gewünschten Kraftfahrzeuggeschwindigkeit $v\_SOLL$, welche die Führungsgröße ist, verglichen. Das Ergebnis dieses Vergleichs wird einem Bremsregler zugeführt, der abhängig vom Ergebnis des Vergleichs über das Bremsstellglied die Regelgröße $v\_IST$ im Sinne einer Angleichung an die Führungsgröße $v\_SOLL$ beeinflusst. Der Bremsregler kann dafür in bekannter Weise durch Kombination von proportionalen und/oder integralen und/oder differentialen Anteilen z.B. als PI- oder PID-Regler ausgelegt sein.

Um eine Auswahl zu treffen, welche Funktion von der elektrisch steuerbaren Betriebsbremsanlage auszuführen ist, ist dem eigentlichen Regelkreis ein Entscheider vorgeschaltet, der anhand von Fahrerwünschen, Betriebszuständen des Kraftfahrzeuges, usw. einer bestimmten Funktion Priorität gibt, um jeweils deren Führungsgröße $v\_SOLL$ dem Regelkreis zur Verfügung zu stellen.

Eine solche Funktion kann z.B. eine als "Adaptive Cruise Control" (ACC) bezeichnete Geschwindigkeitsregelung sein, die gegenüber der als Tempomat bekannten konventionellen Geschwindigkeitsregelung nicht nur eine vom Fahrer vorgegebene Wunschgeschwindigkeit hält, sondern darüber hinaus unter anderem durch selbsttätiges Bremsen einen von der Geschwindigkeit des eigenen Kraftfahrzeuges abhängigen Abstand zu einem vorausfahrenden Kraftfahrzeug einhält.

Weiterhin kann eine solche Funktion z.B. der Bremswunsch des Fahrers sein, der sich aus der Betätigung des Bremspedals ergibt, zum einen um im Falle einer BBW-Anlage eine Bremsanforderung mitzuteilen, zum anderen um zu entscheiden, ob z.B. eine laufende, automatische HDC Regelung zugunsten einer vom Fahrer kontrollierten, konventionellen Bremsung abzubrechen ist.

Die Erfindung befasst sich weiterhin mit dem Problem eines unkomfortablen Kraftfahrzeugverhaltens, das vor allem dann umso stärker auftritt, je stärker beim Eintritt in die HDC-Regelung die Regelgröße $v\_IST$ und die Führungsgröße $v\_SOLL$ voneinander abweichen. Regelungstechnisch ließe sich dies zwar mit einer geeigneten Auslegung des Bremsreglers überkommen. Allerdings stünde dies im Widerspruch zu dem Ziel der Verwendung einer gemeinsamen Reglerstruktur für diverse andere Bremsfunktionen (ABS, ASR, etc. - siehe oben).

Daher wird, wie in Fig. 1 dargestellt, ein HDC-Einsteller vorgeschlagen, der eine Anpassung der Führungsgröße v_SOLL in Abhängigkeit einer Zielgröße v_ZIEL, einem Signal EIN/AUS und der Regelgröße v_IST vornimmt.

Die Zielgröße v_ZIEL ist eine Wunschgeschwindigkeit, mit der die Bergabfahrt im Rahmen von HDC erfolgen soll. Dabei kann es sich entweder um eine im System vordefinierte konstante Größe, z.B. v_ZIEL = 8 Km/h, oder um eine mittels eines Bedienelementes, z.B. Potentiometer, vom Fahrer innerhalb eines Bereiches, z.B. 5 Km/h < v_ZIEL < 20 Km/h, wählbare Größe handeln. Falls das Kraftfahrzeug mit einem Tempomat oder mit ACC ausgerüstet ist, kann vorgesehen werden, die Zielgröße v_ZIEL mittels des dafür vorhandenen Bedienelementes einzustellen. Eine weitere Möglichkeit die Zielgröße v_ZIEL durch den Fahrer zu variieren, besteht darin, durch eine Betätigung des Gaspedals die Zielgröße v_ZIEL zu erhöhen und durch eine Betätigung des Bremspedals die Zielgröße v_ZIEL zu verringern. Schließlich ist es auch möglich, die Zielgröße v_ZIEL in Abhängigkeit von der Neigung der aktuell befahrenen Fahrbahn zu variieren, und zwar je steiler die Neigung desto geringer die Wunschgeschwindigkeit bzw. umgekehrt.

Das Signal EIN/AUS stammt von einem Bedienelement, z.B. Schalter, über das der Fahrer dem System zunächst seinen Wunsch zur Aktivierung von HDC mitteilt. Liegt in einem ersten Schritt ein Wunsch zur Aktivierung von HDC vor, so wird in einem zweiten Schritt eine Aktivierung von HDC auf Plausibilität überprüft. Für diese Überprüfung werden bestimmte Kriterien anhand von Betriebszuständen des Kraftfahrzeuges herangezogen, unter anderem:

Liegt die aktuelle Kraftfahrzeuggeschwindigkeit unterhalb einer niedrigen Geschwindigkeit (z.B. v_IST < 30 Km/h)?

Ist eine unterste Gangstufe (z.B. erster Gang) eingelegt?

Befindet sich das Kraftfahrzeug nicht in einer Bergauffahrt?

Schließt die Überprüfung positiv ab, so wird in einem dritten Schritt die Führungsgröße v_SOLL an die Zielgröße v_ZIEL angepasst.

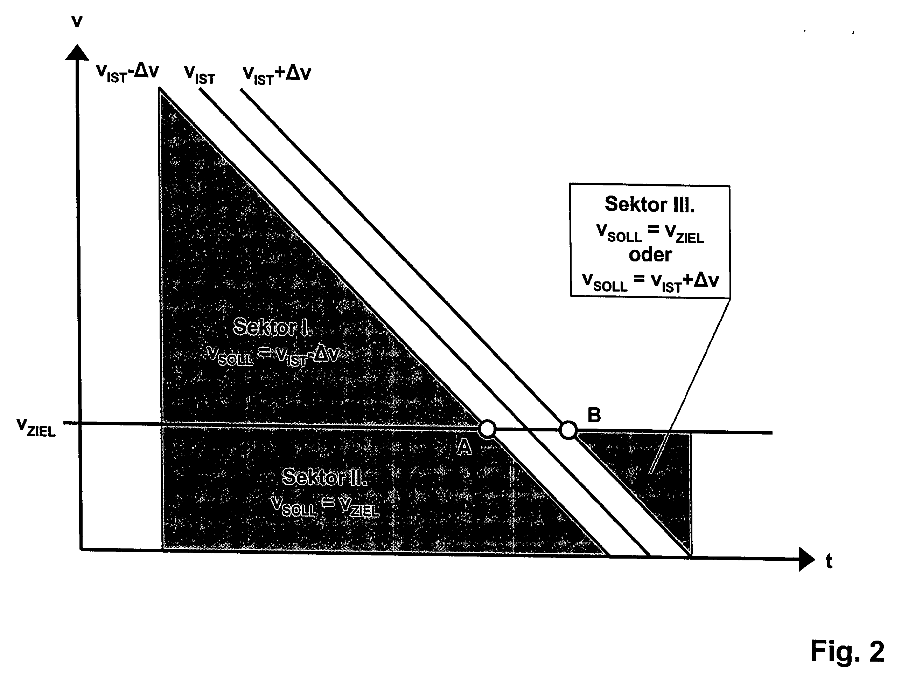

Ein bevorzugtes Ausführungsbeispiel, wie die Anpassung oder Heranführung der Führungsgröße v_SOLL an die Zielgröße v_ZIEL erfolgen kann, ist in dem Geschwindigkeits-Zeit-Diagramm gemäß Fig. 2 dargestellt.

Dabei erfolgt die Anpassung in Abhängigkeit der Regelgröße v_IST, die in negativer und positiver Richtung mit einem Versatz $\Delta v$ beaufschlagt wird. Die sich so ergebenden Verläufe v_IST-$\Delta v$ und v_IST+$\Delta v$ in Abhängigkeit von der Zeit schneiden in den Punkten A und B den Verlauf der konstanten Zielgröße v_ZIEL. Hierdurch werden Sektoren I., II. und III. bestimmt, für die die Führungsgröße v_SOLL jeweils wie folgt gesetzt wird:

Der Sektor I. ist bestimmt durch die Bedingung:

$$v\_IST - \Delta v > v\_ZIEL$$

Ist diese erfüllt, gilt:  v_SOLL := v_IST-$\Delta v$

Dadurch wird die Führungsgröße v_SOLL gleichmäßig in Abhängigkeit der Regelgröße v_IST an die Zielgröße v_ZIEL angenähert, so dass sich vor allem beim Eintritt in die HDC Regelung ein sehr komfortables Kraftfahrzeugverhalten einstellt.

Der Sektor II. ist bestimmt durch die Bedingung:

$$v\_IST - \Delta v <= v\_ZIEL$$

Ist diese erfüllt, gilt:  v_SOLL := v_ZIEL

Dies bedeutet, dass sobald die Regelgröße v_IST abzüglich des Versatzes $\Delta v$ die Zielgröße v_ZIEL erreicht oder unterhalb der Zielgröße v_ZIEL abfällt, die Zielgröße v_ZIEL unmittelbar als Führungsgröße v_SOLL übernommen wird, um ein dynamisches Einregelverhalten zu erzielen.

Der Sektor III. ist bestimmt durch die Bedingung:

$$v\_IST + \Delta v >= v\_ZIEL$$

Ist diese erfüllt, gilt entweder: v_SOLL: := v_ZIEL
oder:  v_SOLL := v_IST+$\Delta v$

Hier wird also entweder wie beim Sektor II. die Zielgröße v_ZIEL unmittelbar als Führungsgröße v_SOLL übernommen, oder, wenn ein weniger dynamisches Einregelverhalten gewünscht ist, die Führungsgröße v_SOLL gleichmäßig in Abhängigkeit der Regelgröße v_IST an die Zielgröße v_ZIEL angenähert. Ein weniger dynamisches Einregelverhalten kann z.B. dann gewünscht sein, wenn gegen Ende einer Bergabfahrt mit sich verrringernder Neigung des Fahrweges der Einfluss der Hangabtriebskraft abnimmt, wodurch die tatsächliche Kraftfahrzeuggeschwindigkeit v_IST kurzfristig einbrechen kann.

Dazu wird der Versatz $\Delta v$ anstatt als Konstante dynamisch in Abhängigkeit der Regelgröße v_IST variiert, in dem Sinne, dass er mit zunehmender Regelgröße v_IST größer wird, so dass sich für die Verläufe v_IST-$\Delta v$ und v_IST+$\Delta v$ keine Geraden, wie in Fig. 2 gezeigt, sondern Hüllkurven ergeben. Dadurch wird erreicht, dass die Führungsgröße v_SOLL im Sektor I. schneller an die Zielgröße v_ZIEL angenähert würde. Dies ist insbesondere dann von Vorteil, wenn beim Eintritt in die HDC-Regelung die Regelgröße v_IST deutlich oberhalb (das heißt mehr als einen vorbestimmten Wert über) der Zielgröße v_ZIEL liegt.

Weiterhin beschäftigt sich die Erfindung mit dem Einfluss der Hangabtriebskraft auf die HDC Regelung, der beim Befahren steil geneigter Fahrwege sehr stark sein kann.

Im Prinzip wird der Einfluss der Hangabtriebskraft durch den Bremsregler ausgeregelt, da die Regelgröße die aktuelle bzw. tatsächliche Kraftfahrzeuggeschwindigkeit v_IST ist, mit der sich das Kraftfahrzeug fortbewegt. Allerdings führen Schwankungen oder sprungförmige Änderungen des Neigungswinkels, wie sie z.B. beim Ein- und Ausfahren in den Hang auftreten können, im Zeitverhalten der Regelgröße v_IST zum Über- bzw. Unterschwingen, was der Fahrer aufgrund der dadurch auftretenden Beschleunigungs- bzw. Verzögerungsphasen als sehr unangenehm empfindet. Dieses Problem ließe sich regelungstechnisch mittels einer geeigneten Auslegung des Bremsreglers, z.B. als adaptiver Regler, lösen. Allerdings ergäbe sich dann, wie auch schon vorstehend erläutert, ein Widerspruch zu dem Ziel, eine gemeinsame Reglerstruktur für diverse Bremsfunktionen zu verwenden.

Zur Lösung dieses Problems dient eine Hangabtriebsaufschaltung, wie in Fig. 1 gezeigt. Die Hangabtriebsaufschaltung überlagert dem Ausgangssignal des Bremsreglers a_R ein Korrektursignal a_N, das in Abhängigkeit von der aktuellen bzw. tatsächlichen Neigung des befahrenen Hangs α_NEIGUNG von der Hangabtriebsaufschaltung bestimmt wird. Durch das Rückführen der Neigung α_NEIGUNG auf den Ausgang des Bremsreglers, wird deren Einwirkung auf den Regelkreis nahezu vollständig kompensiert, so dass das dynamische Verhalten des Bremsreglers nicht nennenswert nachteilig beeinflusst wird. Der für die Qualität der Regelung verantwortliche Bremsregler braucht deshalb nur für den einfachen Fall ausgelegt zu sein, dass das Kraftfahrzeug in der Ebene bewegt wird. Dadurch können neben den regelungstechnischen Vorteilen auch Aufwand und Kosten für die erforderlichen Apparaturen (Rechner-/Speicherkapazität, etc.) gering gehalten werden. Ein weiterer Vorteil ist, dass die erfindungsgemäße Hangabtriebsaufschaltung auch von anderen Funktionen wie z.B. ACC benutzt werden kann.

Die Neigung a_NEIGUNG wird in idealer Weise mittels geeigneter Sensormittel (z.B. Neigungswinkelmesser) messtechnisch erfasst und der Hangabtriebsaufschaltung als Eingangsgröße zugeführt. Verfügt das Kraftfahrzeug über Sensormittel zum Erfassen der Gesamtlängsbeschleunigung des Kraftfahrzeugs, so kann die Neigung auch ermittelt werden, in dem die aus den Signalen der Raddrehzahlsensoren ermittelte Längsbeschleunigung des Kraftfahrzeugs von der Gesamtlängsbeschleunigung des Kraftfahrzeugs subtrahiert wird.

Die Hangabtriebsaufschaltung ermittelt auf Grundlage der Neigung α_NEIGUNG unter Heranziehung von Kraftfahrzeugparametern (z.B. Gewicht) sowie Betriebszuständen der Kraftfahrzeugs (z.B. Beladungszustand) das Korrektursignal α_N.

Ist das Ausgangssignal des Bremsreglers a_R als Verzögerung dimensioniert, so wird auch das Korrektursignal α_N als Verzögerung dimensioniert, demzufolge die beim Bremsstellglied angeforderte Verzögerung mit steigender Neigung α_NEIGUNG erhöht wird.

Der Wert der Neigung a_NEIGUNG kann zwischen etwa +45° und etwa -45° variieren.

Zusammenfassend lassen sich folgende Grundlagen und Vorteile des erfindungsgemäßen Systems nennen:

- Der Sollwert für die Geschwindigkeitsregelung im erfindungsgemäßen HDC-Betrieb ist eine Funktion der aktuellen Kraftfahrzeuggeschwindigkeit, der (variablen) Zielgeschwindigkeit und einer sich dynamisch verändernden maximalen Differenz zwischen der Sollgeschwindigkeit und der aktuellen Kraftfahrzeuggeschwindigkeit.
- Ein harter Regeleinsatz beim erfindungsgemäßen HDC-Betrieb wird vermieden; daraus resultiert ein komfortableres Fahrzeugverhalten.
- Bei der erfindungsgemäßen Bestimmung des Sollwertes wird die aktuelle Kraftfahrzeuggeschwindigkeit mit einbezogen; dies führt zu einem als natürlich empfundenen Fahrverhalten.
- Die erfindungsgemäße Bestimmung der Sollgeschwindigkeit erfolgt abhängig von der Kraftfahrzeuggeschwindigkeit solange die Zielgeschwindigkeit nicht innerhalb eines Grenzbereiches ist.
- Das erfindungsgemäße System arbeitet auch bei sich ändernder Zielgeschwindigkeit.
- Die erfindungsgemäße Hangabtriebsaufschaltung erlaubt den Einsatz herkömmlicher Reglerstrukturen und -algorithmen, welche davon ausgehen, dass das Kraftfahrzeug sich auf im Wesentlichen ebenem Grund bewegt. Dabei wird die Hangabtriebskraft bzw. -beschleunigung ermittelt und als Störgröße dem Regelkreis zugeführt. Dies führt zu einem einfachen Regelorithmus und zu einer kürzeren Reaktionszeit des Reglers bei Gefälle-/Steigungsänderungen.

Abschließend sei noch angemerkt, dass die Erfindung als Software auf der Rechnereinheit der ohnehin vorhandenen elektronischen Steuereinheit der Bremsausrüstung zu implementieren ist, so dass zusätzliche Kosten für Hardware nicht entstehen.

**Patentansprüche**

**1.** System für eine Bergabfahrtssteuerung (HDC) in der Bremsausrüstung eines Kraftfahrzeuges mit einer elektrisch steuerbaren Betriebsbremsanlage, einem Bremsstellglied, das ein individuelles Einstellen der für die einzelnen Räder (i) eines Kraftfahrzeuges erzeugten Bremsdrücke (p_RAD,i) oder Bremsmomente erlaubt, welche die jeweiligen von der Bergabfahrtssteuerung (HDC) beeinflussten Stellgrößen sind, wobei

eine elektronische Steuereinheit vorgesehen ist, die mit Betriebszuständen des Kraftfahrzeuges in Beziehung stehende Größen direkt oder indirekt erfasst und zusätzliche Bremsmomente beim Befahren steil geneigter Fahrwege einstellt,

eine Hangabtriebsaufschaltung vorgesehen ist, die einem Ausgangssignal eines Bremsreglers (a_R) ein Korrektursignal (a_N) überlagert, das in Abhängigkeit von der aktuellen bzw. tatsächlichen Neigung (α_NEIGUNG) eines befahrenen Hangs bestimmt wird, wobei ein Mess-Signal der Neigung (α_NEIGUNG) auf den Ausgang des Bremsreglers zurückgeführt wird, und

dem Regelkreis ein Entscheider vorgeschaltet ist, der anhand von externen oder internen Größen wie Fahrerwünschen, Betriebszuständen des Kraftfahrzeuges, usw. einer bestimmten Funktion Priorität gibt, um jeweils deren Führungsgröße v_SOLL dem Regelkreis zur Verfügung zu stellen, wobei

- die Beeinflussung des Kraftfahrzeugverhaltens, das sich aufgrund des Einstellens der Stellgröße ergibt, anhand der aktuellen Kraftfahrzeuggeschwindigkeit v_IST, welche die Regelgröße ist, fortlaufend erfasst wird;
- die Regelgröße v_IST mit der gewünschten Kraftfahrzeuggeschwindigkeit v_SOLL, welche die Führungsgröße ist, verglichen wird;
- ein HDC-Einsteller dazu vorgesehen ist, eine

Anpassung der Führungsgröße v_SOLL in Abhängigkeit einer Zielgröße v_ZIEL und der Regelgröße v_IST vorzunehmen, bei der für

- einen ersten Bereich (v_IST-$\Delta$v > v_ZIEL) gilt: v_SOLL := v_IST-$\Delta$v, wodurch die Führungsgröße v_SOLL gleichmäßig in Abhängigkeit der Regelgröße v_IST an die Zielgröße v_ZIEL angenähert wird, und/oder
- einen zweiten Bereich (v_IST-$\Delta$v <= v_ZIEL) gilt: v_SOLL := v_ZIEL, wodurch, sobald die Regelgröße v_IST abzüglich des Versatzes $\Delta$v die Zielgröße v_ZIEL erreicht oder unter die Zielgröße v_ZIEL abfällt, die Zielgröße v_ZIEL unmittelbar als Führungsgröße v_SOLL übernommen wird, und/oder
- einen dritten Bereich (v_IST<= v_ZIEL-$\Delta$v) gilt: v_SOLL := v_ZIEL oder v_SOLL := v_IST+$\Delta$v, wodurch entweder die Zielgröße v_ZIEL unmittelbar als Führungsgröße v_SOLL übernommen wird, oder die Führungsgröße v_SOLL gleichmäßig in Abhängigkeit der Regelgröße v_IST an die Zielgröße v_ZIEL angenähert wird, und wobei

- der Versatz $\Delta$v dynamisch in Abhängigkeit der Regelgröße v_IST so variiert wird, dass er mit zunehmender Regelgröße v_IST größer wird.

**2.** System nach Anspruch 1, wobei der HDC-Einsteller dazu vorgesehen ist, die Anpassung der Führungsgröße v_SOLL in Abhängigkeit eines Signals EIN/AUS vorzunehmen.

**3.** System nach Anspruch 1 oder 2, wobei die elektronische Steuereinheit die zusätzlichen Bremsmomente unabhängig von einer Betätigung eines Bremspedals einstellt.

**4.** System nach einem der vorhergehenden Ansprüche, wobei die elektrisch steuerbare Betriebsbremsanlage sowohl für eine Antiblockierregelfunktion (ABS), als auch für eine von einer Fahrerbetätigung unabhängige Bremsfunktion (ASR, ESP) eingerichtet ist.

**5.** System nach einem der vorhergehenden Ansprüche, bei dem das Ergebnis des Vergleichs einem Bremsregler zugeführt wird, der abhängig vom Ergebnis des Vergleichs über das Bremsstellglied die Regelgröße v_IST im Sinne einer Angleichung an die Führungsgröße v_SOLL beeinflusst.

**6.** System nach einem der vorhergehenden Ansprüche, bei dem der Bremsregler durch Kombination von proportionalen und/oder integralen und/oder differentialen Anteilen als P-, PI- oder PID-Regler ausgelegt ist.

**7.** System nach einem der vorhergehenden Ansprüche, bei dem die Funktion eine Geschwindigkeitsregelung (ACC) ist, die eine vom Fahrer vorgegebene Wunschgeschwindigkeit hält und durch selbsttätiges Bremsen einen von der Geschwindigkeit des eigenen Kraftfahrzeuges abhängigen Abstand zu einem vorausfahrenden Kraftfahrzeug einhält.

**8.** System nach einem der vorhergehenden Ansprüche, bei dem die Funktion ein Bremswunsch des Fahrers ist, der sich aus der Betätigung des Bremspedals ergibt, um im Falle einer BBW-Anlage eine Bremsanforderung mitzuteilen, und um zu entscheiden, ob eine laufende automatische HDC-Regelung zugunsten einer vom Fahrer kontrollierten, konventionellen Bremsung abzubrechen ist.

**9.** System nach einem der vorhergehenden Ansprüche, bei dem als Bremsstellglied eine elektrohydraulische Steuereinheit, ein elektronisch steuerbarer Bremskraftverstärker oder eine Brake-By-Wire-Ausrüstung vorgesehen ist.

10. System nach einem der vorhergehenden Ansprüche, bei dem die Zielgröße v_ZIEL eine Wunschgeschwindigkeit ist, mit der die Bergabfahrt im HDC-Betrieb erfolgen soll.

11. System nach dem vorhergehenden Anspruch, bei dem die Wunschgeschwindigkeit entweder eine vordefinierte konstante Größe, oder eine mittels eines Bedienelementes vom Fahrer innerhalb eines Bereiches wählbare Größe ist.

12. System nach dem vorhergehenden Anspruch, bei dem die Wunschgeschwindigkeit mittels eines im Kraftfahrzeug vorhandenen Tempomat-Bedienelementes einzustellen ist.

13. System nach Anspruch 10 oder 11, bei dem die Wunschgeschwindigkeit durch den Fahrer mittels einer Betätigung des Gaspedals zu erhöhen und mittels einer Betätigung des Bremspedals zu verringern ist.

14. System nach Anspruch einem der vorhergehenden Ansprüche, bei dem die Wunschgeschwindigkeit in Abhängigkeit von der Neigung der aktuell befahrenen Fahrbahn zu variieren ist, wobei eine steilere Neigung zu einer geringeren Wunschgeschwindigkeit und umgekehrt führt.

15. System nach einem der Ansprüche 2 bis 14, bei dem das Signal EIN/AUS in einem ersten Schritt dem System mittels eines Bedienelementes den Fahrerwunsch zur Aktivierung des HDC-Betriebes mitteilt.

16. System nach Anspruch 15, bei dem das Signal EIN/AUS in einem zweiten Schritt vor einer Aktivierung des HDC-Betriebes eine solche Aktivierung auf Plausibilität überprüft wird.

17. System nach Anspruch 16, bei dem für die Plausibilitätsüberprüfung bestimmte Kriterien, abgeleitet von Betriebszuständen des Kraftfahrzeugs überprüft werden.

18. System nach Anspruch 17, bei dem folgende Betriebszustände des Kraftfahrzeugs überprüft werden:

(i) Liegt die aktuelle Kraftfahrzeuggeschwindigkeit unterhalb einer niedrigen Geschwindigkeit, und/oder
(ii) ist eine untere Gangstufe eingelegt, und/oder
(iii) befindet sich das Kraftfahrzeug nicht in einer Bergauffahrt?

19. System nach Anspruch 18, bei dem im Fall einer positiven Überprüfung in einem dritten Schritt die Führungsgröße v_SOLL an die Zielgröße v_ZIEL angepasst wird.

**Claims**

1. System for a hill descent control (HDC) in the braking equipment of a motor vehicle comprising an electrically controllable service brake system, a brake actuator which permits individual adjustment of the braking pressures (p_RAD,i) or braking moments generated for the individual wheels (i) of a motor vehicle, which are the respective manipulated variables controlled by the hill descent control (HDC), an electronic control unit being provided which directly or indirectly detects variables related to operating conditions of the motor vehicle and adjusts additional braking moments when driving on steeply inclined roads, a downhill momentum compensation circuit being provided which superimposes a corrective signal (a_N), which is determined according to the current incline and/or actual incline (a_NEIGUNG) of a slope which is driven on, onto an output signal of a brake regulator (a_R), a measuring signal of the incline (a_NEIGUNG) being fed back to the output of the brake regulator, and a decision unit is arranged upstream of the control circuit which, using external or internal variables such as the driver's wishes, operating conditions of the motor vehicle, etc., gives priority to a specific function in order to provide the respective reference variable v_SOLL thereof to the control circuit,

- the control of the motor vehicle behaviour which is produced as a result of adjusting the manipulated variable being continually detected using the current motor vehicle speed v_IST which is the control variable;
- the control variable v_IST being compared with the desired motor vehicle speed v_SOLL which is the reference variable;
- an HDC adjuster being provided to adapt the reference variable v_SOLL depending on a target variable v_ZIEL and the control variable v_IST, in which for
- a first range (v_IST-Δv > v_ZIEL) the following applies: v_SOLL:= v_1ST-Δv, whereby the reference variable v_SOLL is brought closer to the target variable v_ZIEL in a uniform manner depending on the control variable v_IST, and/or
- a second range (v_IST-Δv <= v_ZIEL) the following applies: v_SOLL:= v_ZIEL, whereby, as soon as the control variable v_IST, minus the offset Δv, reaches the target variable v_ZIEL or falls below the target variable v_ZIEL, the target variable v_ZIEL is immediately accepted as a reference variable v_SOLL, and/or
- a third range (v_IST <= v_ZIEL-Δv) the following applies: v_SOLL:= v_ZIEL or v_SOLL:= v_IST+Δv, whereby either the target variable v_ZIEL is immediately accepted as a reference variable v_SOLL or the reference variable v_SOLL is brought closer to the target variable v_ZIEL in a uniform manner depending on the control variable v_IST, and
- the offset Δv being dynamically varied depending on the control variable v_IST such that it becomes greater when the control variable v_IST increases.

2. System according to Claim 1, the HDC adjuster being provided to adapt the reference variable v_SOLL depending on an ON/OFF signal.

3. System according to Claim 1 or 2, the electronic control unit adjusting the additional braking moments, irrespective of whether a brake pedal is actuated.

4. System according to one of the preceding claims, the electrically controllable service brake system being designed both for an anti-locking control function (ABS) and for a braking function (ASR, ESP), irrespective of driver actuation.

5. System according to one of the preceding claims, in which the result of the comparison is supplied to a brake regulator which controls via the brake actuator the control variable v_IST in the sense of adapting to the reference variable v_SOLL, depending on the result of the comparison.

6. System according to one of the preceding claims, in which the brake regulator is designed as a P regulator, PI regulator or PID regulator by combining proportional and/or integral and/or differential components.

7. System according to one of the preceding claims, in which the function is a speed regulator (ACC) which maintains a desired speed predetermined by the driver, and maintains a distance from a motor vehicle driving ahead depending on the speed of the individual motor vehicle, by automatic braking.

8. System according to one of the preceding claims, in which the function is a braking demand of the driver, which results from the actuation of the brake pedal, in order to communicate a braking demand in the case of a BBW unit, and in order to decide whether automatic HDC which is in operation may be interrupted in favour of conventional braking controlled by the driver.

9. System according to one of the preceding claims, in which an electrohydraulic control unit, an electronically controllable brake booster or brake-by-wire equipment is provided as a brake actuator.

10. System according to one of the preceding claims, in which the target variable v_ZIEL is a desired speed at which the hill descent is intended to take place in HDC mode.

11. System according to the preceding claim, in which the desired speed is either a predefined constant variable, or is a variable which may be selected by the driver by means of an operating element within a range.

12. System according to the preceding claim, in which the desired speed may be adjusted by means of a cruise control operating element present in the motor vehicle.

13. System according to Claim 10 or 11, in which the desired speed may be increased by the driver by means of actuating the accelerator pedal and reduced by means of actuating the brake pedal.

14. System according to one of the preceding claims, in which the desired speed may be varied depending on the incline of the road currently driven on, a steeper incline resulting in a lower desired speed and vice-versa.

15. System according to one of Claims 2 to 14, in which the ON/OFF signal in a first step communicates to the system, by means of an operating element, the desire of the driver to activate the HDC mode.

16. System according to Claim 15, in which the ON/OFF signal in a second step before an activation of the HDC mode such an activation is monitored for plausibility.

17. System according to Claim 16, in which for the plausibility monitoring, specific criteria derived from operating conditions of the motor vehicle are monitored.

18. System according to Claim 17, in which the following operating conditions of the motor vehicle are monitored:

(i) is the current motor vehicle speed below a low speed and/or
(ii) is a low gear engaged and/or
(iii) is the motor vehicle not driving uphill?

19. System according to Claim 18, in which in the case of a positive result to the monitoring, in a third step the reference variable v_SOLL is adapted to the target variable v_ZIEL.

**Revendications**

1. Système de contrôle de vitesse en descente (HDC) placé dans l'équipement de freinage d'un véhicule à moteur, comportant :

   un système de freinage de service à commande électrique,
   un actionneur de freinage qui permet un réglage individuel des pressions de freinage (p_RAD,i) ou des couples de freinage générés pour les différentes roues (i) d'un véhicule à moteur, lesquels constituent les grandeurs de réglage influencées par le contrôle de vitesse en descente (HDC),
   dans le cadre duquel
   il est prévu une unité de commande électronique qui détecte directement ou indirectement les grandeurs se trouvant en relation avec les états de fonctionnement du véhicule et fait intervenir des couples de freinage supplémentaires lorsque le véhicule roule sur une chaussée à forte déclivité,
   et prévu un dispositif d'application de force de déclivité qui superpose à un signal de sortie d'un régulateur de freinage (a_R) un signal correcteur (a_N) qui est déterminé en fonction de la déclivité momentanée ou effective (o_NEIGUNG) de la chaussée où roule le véhicule, un signal de mesure de ladite déclivité (o_NEIGUNG) étant renvoyé à la sortie du régulateur de freinage, et
   un décideur est placé en amont du circuit de régulation, lequel décideur donne priorité à une certaine fonction en se basant sur des grandeurs externes ou internes, telles que souhaits du conducteur, états de fonctionnement du véhicule, etc. pour fournir à chaque fois au circuit de régulation la grandeur de référence v_SOLL requise,

   - l'influence du comportement du véhicule, lequel comportement résulte de l'ajustage de la grandeur de réglage, étant détectée en continu sur la base de la vitesse momentanée du véhicule v_IST qui constitue la grandeur régulée ;
   - la grandeur régulée v_IST étant comparée à la vitesse souhaitée du véhicule v_SOLL qui constitue la grandeur de référence ;
   - un module de réglage HDC étant prévu pour procéder à

   une adaptation de la grandeur de référence v_SOLL en fonction d'une grandeur cible v_ZIEL et de la grandeur régulée v_IST, dans le cadre de laquelle

   - il est établi, pour une première plage (v_IST-$\Delta$v > v_ZIEL), que v_SOLL := v_IST-$\Delta$v, si bien que la grandeur de référence v_SOLL est, en fonction de la grandeur régulée v_IST, approchée uniformément de la grandeur cible v_ZIEL, et/ou
   - il est établi, pour une deuxième plage (v_IST-$\Delta$v <= v_ZIEL), que v_SOLL := v_ZIEL, si bien que la grandeur cible v_ZIEL est immédiatement prise comme grandeur de référence v_SOLL dès que la grandeur régulée v_IST, déduction faite du décalage $\Delta$v, atteint la grandeur cible v_ZIEL ou tombe en dessous de la grandeur cible v_ZIEL, et/ou
   - il est établi, pour une troisième plage (v_IST<= v_ZIEL-$\Delta$v) que v_SOLL := v_ZIEL ou v_SOLL := v_IST+$\Delta$v, si bien que soit la grandeur cible v_ZIEL est immédiatement prise comme grandeur de référence v_SOLL, soit la grandeur de référence v_SOLL est approchée uniformément de la grandeur cible v_ZIEL en fonction de la grandeur régulée v_IST, et
   - le décalage $\Delta$v étant modulé dynamiquement en fonction de la grandeur régulée v_IST de telle sorte qu'il augmente à mesure qu'augmente la grandeur régulée v_IST.

2. Système selon la revendication 1, le module de réglage HDC étant prévu pour procéder à l'adaptation de la grandeur de référence v_SOLL en fonction d'un signal MARCHE/ARRET.

3. Système selon la revendication 1 ou 2, l'unité de commande électronique ajuste les couples de freinage supplémentaires indépendamment de l'actionnement d'une pédale de frein.

4. Système selon l'une des revendications précédentes, le système de freinage de service à commande électrique étant conçu pour être équipé aussi bien d'une fonction de régulation antiblocage (ABS) que d'une fonction de freinage indépendante d'un actionnement par le conducteur (ASR, ESP).

5. Système selon l'une des revendications précédentes, dans le cadre duquel le résultat de la comparaison est amené à un régulateur de freinage qui, en fonction du résultat de cette comparaison, influence par le biais de l'actionneur de freinage la grandeur régulée v_IST dans le sens d'un alignement sur la grandeur de référence v_SOLL.

**6.** Système selon l'une des revendications précédentes, dans le cadre duquel le régulateur de freinage est conçu comme un régulateur P, un régulateur PI ou un régulateur PID par combinaison de fractions proportionnelles et/ou intégrales et/ou différentielles.

**7.** Système selon l'une des revendications précédentes, dans le cadre duquel la fonction est un régulateur de vitesse de croisière (ACC) qui permet au conducteur de maintenir une vitesse déterminée à laquelle il souhaite rouler et de conserver par freinage automatique une distance avec un véhicule qui le précède, laquelle distance dépend de la vitesse de son propre véhicule.

**8.** Système selon l'une des revendications précédentes, dans le cadre duquel la fonction est un souhait de freinage de la part du conducteur, qui résulte de l'actionnement de la pédale de frein, pour communiquer une demande de freinage dans le cas d'un système de freinage du type « brake by wire » et pour décider s'il faut interrompre un réglage HDC automatique en cours d'exécution en faveur d'un freinage conventionnel contrôlé par le conducteur.

**9.** Système selon l'une des revendications précédentes, dans le cadre duquel il est prévu comme actionneur de freinage une unité de commande électrohydraulique, un amplificateur de freinage à commande électronique ou un équipement « brake-by-wire ».

**10.** Système selon l'une des revendications précédentes, dans le cadre duquel la grandeur cible v_ZIEL est une vitesse souhaitée pour la conduite en mode HDC du véhicule sur chaussée pentue.

**11.** Système selon la revendication précédente, dans le cadre duquel la vitesse souhaitée est soit une grandeur constante prédéfinie, soit une grandeur pouvant être sélectionnée par le conducteur à l'aide d'un organe de commande, à l'intérieur d'une plage donnée.

**12.** Système selon la revendication précédente, dans le cadre duquel la vitesse souhaitée est à régler au moyen de l'organe de commande d'un régulateur de vitesse dont le véhicule est équipé.

**13.** Système selon la revendication 10 ou 11, dans le cadre duquel la vitesse souhaitée est fixée par le conducteur qui actionne soit l'accélérateur, soit la pédale de frein, selon qu'il souhaite augmenter ou réduire la vitesse de son véhicule.

**14.** Système selon l'une des revendications précédentes, dans le cadre duquel la vitesse souhaitée est modulable en fonction de la déclivité de la chaussée momentanément empruntée, une plus forte déclivité ayant pour conséquence une vitesse souhaitée plus faible et inversement.

**15.** Système selon l'une des revendications 2 à 14, dans le cadre duquel le signal MARCHE/ARRET communique dans un premier temps au système le souhait du conducteur au moyen d'un organe de commande, en vue de l'activation du mode HDC.

**16.** Système selon la revendication 15, dans le cadre duquel le signal MARCHE/ARRET vérifie dans un deuxième temps, avant activation du mode HDC, la plausibilité d'une telle activation.

**17.** Système selon la revendication 16, dans le cadre duquel certains critères déduits des états de fonctionnement du véhicule font l'objet d'une vérification.

**18.** Système selon la revendication 17, dans le cadre duquel les états de fonctionnement suivants sont vérifiés :

(i) La vitesse momentanée du véhicule se situe-t-elle en dessous d'une faible vitesse, et/ou
(ii) un rapport de transmission inférieur se trouve-t-il enclenché, et/ou
(iii) le véhicule ne se trouve-t-il pas sur une route qui monte ?

**19.** Système selon la revendication 18, dans le cadre duquel la grandeur de référence v_SOLL est dans un troisième temps adaptée à la grandeur cible v_ZIEL dans le cas d'une vérification positive.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0856446 B1
- WO 0114185 A1
- WO 9611826 A
- DE 19648559 A1
- US 20040215385 A1